# FASCICULE DE BREVET EUROPEEN

(11) **EP 3 017 492 B1**
(45) Date de publication et mention de la délivrance du brevet: **29.11.2017**
(21) Numéro de dépôt: 14735544.0
(22) Date de dépôt: 30.06.2014
(51) Int. Cl.: H01M 8/04303, H01M 8/04223, H01M 8/04858, H01M 8/1018, H01M 8/04746

(54) **PROCÉDÉ D'ARRÊT D'UN SYSTÈME À PILE À COMBUSTIBLE, ET SYSTÈME À PILE À COMBUSTIBLE**
VERFAHREN ZUM HERUNTERFAHREN EINES SYSTEMS MIT EINEM BRENNSTOFFZELLENSTAPEL UND SYSTEM MIT EINEM BRENNSTOFFZELLENSTAPEL
METHOD FOR SHUTTING DOWN A SYSTEM COMPRISING A FUEL CELL STACK AND SYSTEM COMPRISING A FUEL CELL STACK

(30) Priorité: 04.07.2013 FR 1356560
(43) Date de publication de la demande: 11.05.2016
(73) Titulaire: Compagnie Générale des Etablissements Michelin, 63000 Clermont-Ferrand (FR)
(72) Inventeur: BRAILLARD, Vincent, F-63040 Clermont-Ferrand Cedex 9 (FR); PAGANELLI, Gino, F-63040 Clermont-Ferrand Cedex 9 (FR); DELFINO, Antonio, F-63040 Clermont-Ferrand Cedex 9 (FR)
(74) Mandataire: Roussy, Delphine
(86) Numéro de dépôt international: PCT/EP2014/063795
(87) Numéro de publication internationale: WO 2015/000824

(56) Documents cités:
- FR-A1- 2 952 232
- KR-A- 20090 111 241
- US-A1- 2004 101 724
- US-A1- 2005 136 297
- US-A1- 2008 075 986
- US-A1- 2012 077 102

## Description

### DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell ou PEMFC pour Proton Exchange Membrane Fuel Cell).

### ETAT DE LA TECHNIQUE

On sait que les piles à combustibles permettent la production directe d'énergie électrique par une réaction électrochimique d'oxydoréduction à partir d'un gaz carburant et d'un gaz comburant, sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

Ainsi, l'anode alimentée en carburant, par exemple de l'hydrogène, est le siège d'une demi-réaction d'oxydation. Dans le même temps, la cathode alimentée en comburant, par exemple de l'oxygène pur ou contenu dans de l'air, est le siège d'une demi-réaction de réduction. Afin que ces deux demi-réactions soient possibles, il est nécessaire de charger l'anode et la cathode en catalyseur, à savoir un composé capable d'augmenter la vitesse de réaction, sans toutefois être lui-même consommé. Parmi les différents catalyseurs employés, on a constaté que les meilleures performances étaient obtenues en utilisant du platine, seul ou en alliage.

Afin d'éviter toute dégradation de la pile à combustible et notamment des catalyseurs lors des nombreux arrêts / redémarrage subis au cours de la vie d'une pile, il est nécessaire de prévoir des procédures d'arrêt spécifiques, telle que celle décrite dans la demande de brevet EP2494642. La demande de brevet FR2952232 décrit un procédé d'arrêt d'une pile à combustible et la demande de brevet KR20090111241 décrit un procédé d'arrêt d'un système de pile à combustible avec disparition totale de l'hydrogène présent à l'anode par circulation d'air.

Toutefois, on a constaté une baisse des performances de la pile à combustible après quelques cycles arrêts / redémarrage. Par conséquent, l'objectif de la présente invention est de proposer un procédé permettant de maintenir les performances d'une pile à combustible sans en perturber le fonctionnement et sans créer de dégradation annexes.

### BREVE DESCRIPTION DE L'INVENTION

L'invention propose ainsi un procédé d'arrêt d'une pile à combustible à membrane électrolyte polymère selon la revendication 1, la pile à combustible étant installée dans un système comprenant un circuit d'alimentation en gaz carburant reliant un réservoir de gaz carburant à l'anode de la pile à combustible, et un circuit d'alimentation en gaz comburant reliant un réservoir de gaz comburant, ou l'air atmosphérique, le gaz carburant étant de l'hydrogène, et le procédé comprenant les étapes suivantes :
(i) coupure de l'alimentation en gaz carburant et en gaz comburant,
(ii) maintien d'un prélèvement de courant tant que le gaz comburant n'est pas consommé ;
(iii) injection de gaz enrichi en azote dans le système d'alimentation en gaz comburant et le procédé étant caractérisé en ce que, à l'issue de la procédure d'arrêt, on fait disparaître totalement l'hydrogène encore présent à l'anode de la pile à combustible, effectuée après extinction complète de la pile à combustible, cette étape comprenant une étape de pompage électrochimique mettant en oeuvre une membrane électrochimique installée en dehors de l'empilement.

L'hydrogène présent à l'anode permet de garantir un maintien du potentiel électrochimique à 0V. Par conséquent, lorsque l'hydrogène disparaît, s'en suit une augmentation de ce potentiel électrochimique. Or, si le potentiel électrochimique dépasse un certain seuil prédéterminé, les espèces chimiques absorbées par un catalyseur de la pile à combustible lors de réactions secondaires se produisant au cours du fonctionnement de la pile sont relâchées. Cette désorption conduit à un nettoyage, permettant au catalyseur de retrouver une surface active plus importante. Par conséquent, les performances du catalyseur augmentent, permettant ainsi d'augmenter les performances de la pile à combustible.

On précise ici que cette disparition d'hydrogène ne doit s'effectuer qu'après extinction complète de la pile à combustible. En effet, une absence partielle ou totale d'hydrogène pendant la procédure d'arrêt conduirait aux réactions suivantes :
- Corrosion à l'anode du carbone qui supporte le catalyseur,
- Dissolution du platine à la cathode,
- Diminution irréversible de l'activité catalytique, et
- Inversion du potentiel entre l'anode et la cathode dans le cas d'une pile à combustible composée de plusieurs cellules.

De telles réactions seraient contre-productives, puisqu'elles diminueraient les performances de la pile à combustible, et annuleraient ainsi tout le bénéfice du procédé selon la présente invention. On considère que la pile est éteinte dès lors que la tension résiduelle entre l'anode et la cathode devient très faible, par exemple inférieure ou égale à 0.06 volts. L'ultime étape de faire disparaître l'hydrogène peut être effectuée soit à chaque arrêt de la pile, soit moins souvent.

Dans une réalisation avantageuse de l'invention, l'étape de faire disparaître l'hydrogène comprend une étape d'aspiration mécanique. Cette aspiration est, par exemple, effectuée par une pompe à vide. Par exemple, dans une configuration telle que décrite ultérieurement à l'aide des figures, un fonctionnement de la pompe à vide pendant une durée de deux minutes permet d'extraire 90% de l'hydrogène encore présent à l'anode après extinction.

Dans une réalisation avantageuse de l'invention, l'étape de faire disparaître l'hydrogène comprend une étape de soufflage, consistant à injecter à la cathode de l'azote en surpression, destiné à remplacer l'hydrogène.

Dans une réalisation avantageuse de l'invention, l'étape de faire disparaître l'hydrogène est effectuée en consommant l'hydrogène au moyen d'une résistance installée aux bornes de la pile à combustible.

Selon l'invention, l'étape de faire disparaître l'hydrogène comprend une étape de pompage électrochimique, mettant en oeuvre une membrane électrochimique installée en dehors de l'empilement. Une telle membrane électrochimique fonctionne sur le même principe que les cellules formant l'empilement de la pile à combustible, et permet ainsi de consommer l'hydrogène par des réactions électrochimiques similaires à celles qui se déroulent lors du fonctionnement de la pile.

Il est à noter que ce moyen de faire disparaître l'hydrogène employant une membrane électrochimique peut être utilisé seul ou en combinaison avec les autres moyens de disparation de l'hydrogène mentionnés auparavant. Ainsi, dans une réalisation avantageuse, la résistance installée aux bornes de la pile à combustible est utilisée pour consommer les résidus d'hydrogène restant après application d'un autre des moyens précités.

On a constaté que l'utilisation de la pompe à vide, par exemple, conduisait à une pénurie d'hydrogène locale dans certaines cellules, tout en laissant de l'hydrogène présent dans d'autres. Pour remédier à cela, dans une réalisation avantageuse, on utilise une vanne trois voies pour alterner une étape où l'on fait le vide dans la pile et une étape où l'on mélange les gaz encore présents dans la pile, pour s'assurer que chaque étape de vide permet effectivement de faire disparaître l'hydrogène dans l'ensemble des cellules.

Après disparition de l'hydrogène, on constate que l'air ambiant pénètre dans la pile, par perméation naturelle. Cette entrée progressive d'air permet de maintenir l'excursion de potentiel conduisant au regain de performance précédemment mentionné. Il est à noter que dans le cas d'une pile totalement étanche, il faudrait prévoir de forcer la perméation afin de garantir l'entrée d'un minimum d'air dans la pile.

Par ailleurs, l'invention concerne également un procédé de démarrage d'une pile à combustible à membrane électrolyte comportant une étape initiale d'aspiration de gaz comburant présent à l'anode avant d'injecter le gaz carburant. En effet, lorsqu'une pile est arrêtée par le biais d'un procédé d'arrêt conforme à la présente invention, du gaz comburant a remplacé l'hydrogène dans l'ensemble de la pile, y compris au niveau de l'anode. Par conséquent, avant d'injecter l'hydrogène pour démarrer un cycle de fonctionnement, il est nécessaire de faire disparaître le gaz comburant afin d'éviter qu'il ne cohabite avec l'hydrogène sur une même électrode, ce qui aurait pour conséquence la création de tensions de plan, néfastes à la durabilité de la pile. Il est à noter que ce procédé de démarrage peut être mis en oeuvre indépendamment de la présente invention.

L'invention concerne également un système à pile à combustible comprenant un empilement de cellules électrochimiques formant pile à combustible à membrane polymère échangeuse d'ions et un circuit gaz selon la revendication 6, ledit circuit comprenant :
- un circuit d'alimentation en gaz carburant reliant un réservoir de gaz carburant à l'anode de la pile à combustible,
- un circuit d'alimentation en gaz comburant reliant un réservoir de gaz comburant, ou l'air atmosphérique, à la cathode de la pile à combustible,
caractérisé en ce que le système comprend en outre des moyens aptes à provoquer une disparition de l'hydrogène présent à l'anode de la pile à combustible, ces moyens comprenant une membrane polymère installée en dehors de l'empilement.

Dans une réalisation avantageuse, les moyens aptes à provoquer une disparition de l'hydrogène comprennent une pompe à vide installée dans le circuit d'alimentation en gaz carburant.

Dans une réalisation avantageuse, les moyens aptes à provoquer une disparition de l'hydrogène comprennent une résistance installée en parallèle de la pile à combustible.

### BREVE DESCRIPTION DES FIGURES

La suite de la description permet de bien faire comprendre tous les aspects de l'invention au moyen des dessins joints dans lesquels :
- la figure 1 est un schéma d'une pile à combustible selon l'invention, alimentée en hydrogène et air ;
- la figure 2 montre les performances au cours du temps d'une pile à combustible mettant en oeuvre l'invention.

### DESCRIPTION DE MEILLEURS MODES DE REALISATION DE L'INVENTION

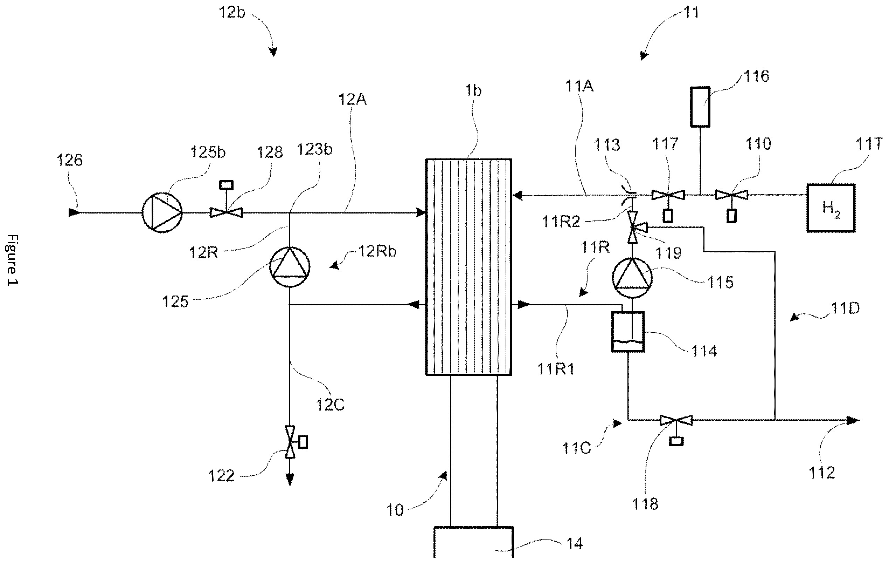

A la figure 1, on voit une pile à combustible 1b du type à électrolyte sous la forme d'une membrane polymère (c'est à dire de type PEFC pour Polymer Electrolyte Fuel Cell ou PEMFC pour Proton Exchange Membrane Fuel Cell). La pile à combustible 1b est approvisionnée par deux gaz, à savoir le carburant (l'hydrogène stocké ou fabriqué à bord du véhicule) et le comburant (air ou oxygène pur) qui alimentent les électrodes des cellules électrochimiques. Une charge électrique 14 est branchée à la pile à combustible 1b par une ligne électrique 10. La figure 1 représente des éléments du circuit cathodique utiles à la compréhension de l'invention, bien que l'objet de la présente demande porte essentiellement sur le circuit anodique d'une pile à combustible.

### Description du circuit anodique :

L'installation comporte un circuit d'alimentation 11 en gaz carburant coté anode. On voit un réservoir 11T d'hydrogène pur H₂ relié à l'entrée du circuit anodique de la pile à combustible 1b au moyen d'une canalisation d'alimentation qui passe par une vanne de coupure 110, puis par une vanne de régulation de pression 117, puis par un éjecteur 113, puis par un canal d'alimentation 11A en gaz carburant aboutissant aux anodes. Une sonde de pression (non représentée) est installée sur le canal d'alimentation 11A juste avant l'entrée dans la pile à combustible 1b. Le circuit d'alimentation 11 en hydrogène (le carburant) comprend également un circuit de recyclage 11R de l'hydrogène non consommé par la pile à combustible, branché à la sortie du circuit anodique de la pile à combustible 1b. Un séparateur d'eau 114 est installé sur le circuit de recyclage 11R. L'éjecteur 113 ainsi qu'une pompe de recirculation 115 assurent le recyclage de l'hydrogène non consommé et le mélange à l'hydrogène frais en provenance du réservoir.

On voit aussi une chambre d'accumulation additionnelle de gaz carburant 116 disposée sur la tuyauterie du circuit d'alimentation 11 en gaz carburant, entre la vanne de coupure 110 et une vanne de régulation de pression 117. La chambre d'accumulation additionnelle est, dans ce mode préféré de réalisation, placée là où la pression est la plus élevée dans le circuit d'alimentation, de façon à en amoindrir le volume, ou à volume identique, de façon à stoker une plus grande quantité d'hydrogène. Notons que la chambre d'accumulation additionnelle de gaz carburant 116 pourrait être disposée à n'importe quel endroit du circuit d'alimentation en gaz carburant, c'est-à-dire à n'importe quel endroit entre la vanne de coupure 110 et la pile à combustible 1b, même sur le circuit de recyclage 11R, ou sur le circuit entre le séparateur d'eau 114 et l'éjecteur 113. Cependant il est intéressant de la placer à un endroit du circuit où la pression est plus élevée afin d'en réduire le volume. D'autre part, la position en amont de la vanne de régulation de pression rend possible une décharge contrôlée de ladite chambre d'accumulation.

On voit également une pompe d'aspiration 119 et une vanne de coupure 118 installées sur une canalisation aboutissant à l'atmosphère et branchée sur la boucle de recyclage 11R du gaz carburant, de préférence sous le séparateur d'eau 114. Le branchement à cet endroit précis, montré à la figure 1, permet en commandant la vanne de coupure 118 d'assurer la triple fonction d'évacuation de l'eau, de purge, et d'aspiration de l'hydrogène. Cependant, ce détail de réalisation n'est pas limitatif. Pour assurer la fonction d'aspiration de l'hydrogène, la canalisation comportant la vanne de coupure 118 pourrait être branchée à n'importe quel endroit en aval de la vanne de régulation de pression 117.

La pompe d'aspiration 119 ainsi que la vanne de coupure 118 sont aptes à être commandées de manière à aspirer l'hydrogène après extinction de la pile, afin de provoquer sa disparition totale. De la même façon, la charge 14 correspond à la résistance précédemment évoquée. Les autres moyens prévus par la présente invention, tels que la membrane électrochimique ne sont pas représentés sur cette figure.

### Description du circuit cathodique :

L'installation comporte également un circuit d'alimentation 12b en gaz comburant coté cathodes. Ce circuit comporte un compresseur d'air 125b servant en usage normal à alimenter la pile à combustible en air atmosphérique 126 au moyen d'une canalisation d'alimentation qui passe par une vanne de coupure 128, puis par un canal d'alimentation 12A en gaz comburant aboutissant aux cathodes. Il est à noter que la présente invention trouve aussi son application dans le cas d'une pile à combustible alimentée en oxygène pur. Dans ce cas, un réservoir d'oxygène serait situé en lieu et place de l'entrée d'air 126.

En outre, le circuit d'alimentation 12 en air, contenant l'oxygène, comprend également un circuit de recyclage 12R de l'oxygène non consommé par la pile à combustible, branché à la sortie du circuit cathodique de la pile à combustible 1b. Le circuit de recyclage 12Rb est directement branché au canal d'alimentation 12A par un branchement 123b en dérivation en aval du compresseur d'air 125b. Une vanne régulatrice de pression 122 permet, en fonctionnement normal, de faire échapper en continu l'air appauvri vers l'atmosphère. Le degré d'ouverture de cette vanne régulatrice de pression 122 est contrôlé pour maintenir la pression à la valeur souhaitée dans le circuit cathodique.

En fonctionnement normal de la pile à combustible, le circuit de recyclage n'est pas utilisé, la pompe 125 est à l'arrêt, et aucun gaz ne circule dans le circuit de recyclage 12Rb qui devient virtuellement inexistant. La totalité du gaz non consommé par le circuit cathodique est dirigé vers l'atmosphère à travers la vanne régulatrice de pression 122b. Dans le cas où la pompe 125 n'assure pas naturellement la fonction d'anti-retour lorsqu'elle est arrêtée, il faut prévoir un clapet anti-retour sur le circuit de recyclage 12Rb de façon à garantir le passage de la totalité de l'air fourni par le compresseur vers le circuit cathodique de la pile à combustible 1b.

La vanne de coupure 128 permet d'isoler le circuit cathodique de l'air atmosphérique lorsque la pile est à l'arrêt. Cette vanne de coupure 128 peut indifféremment être placée en amont ou en aval du compresseur.

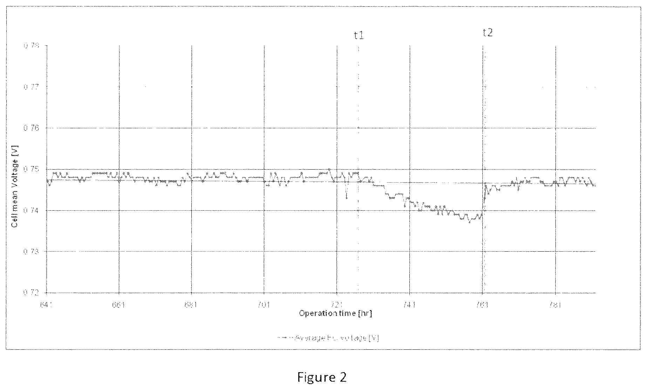

La figure 2 montre les performances d'une pile à combustible de 16 cellules mettant en oeuvre l'invention. Chaque point de la courbe est enregistré dès que la température et le courant ont atteint leur valeur nominale (70°C - 100A), et représente la tension moyenne des cellules après chaque démarrage de la pile. Dans l'exemple de mise en oeuvre, la pile est soumise à des cycles d'arrêt et démarrage répétés d'environ 1 heure.

L'axe des abscisses montre le nombre d'heures de fonctionnement cumulé par la pile à combustible, et l'axe des ordonnées montre la tension moyenne des cellules. Du temps to, correspondant au début de la courbe, au temps t1 représenté par un premier trait vertical, l'étape de faire disparaitre l'hydrogène est effectuée après chaque extinction de le pile. On constate alors que les performances de la pile ne diminuent pas, puisque la tension moyenne des cellules reste quasiment constante au cours du cyclage répété de la pile à combustible.

En revanche, à partir du temps t1, cette étape de faire disparaître l'hydrogène n'est plus effectuée. La pile à combustible est donc stockée avec de l'hydrogène à l'anode et de l'azote à la cathode. On constate alors que les performances de la pile déclinent rapidement, puisque la tension moyenne aux bornes des cellules passe de 0,75 à 0,74V.

A partir du temps t2, marqué par le second trait vertical, on effectue de nouveau l'étape consistant à faire disparaître l'hydrogène. On constate un regain rapide et durable des performances.

Par conséquent, la présente invention permet effectivement de maintenir les performances de la pile à combustible, sans la dégrader.

## Revendications

1. Procédé d'arrêt d'une pile à combustible à membrane électrolyte polymère, la pile à combustible comprenant un empilement de cellules et étant installée dans un système comprenant un circuit d'alimentation en gaz carburant reliant un réservoir de gaz carburant à l'anode de la pile à combustible, et un circuit d'alimentation en gaz comburant reliant un réservoir de gaz comburant, ou l'air atmosphérique, le procédé comprenant une procédure d'extinction de la pile à combustible comprenant les étapes suivantes :
• (i) coupure de l'alimentation en gaz carburant et en gaz comburant,
• (ii) maintien d'un prélèvement de courant tant que le gaz comburant n'est pas suffisamment consommé ;
• (iii) injection de gaz enrichi en azote dans le système d'alimentation en gaz comburant et le procédé comprenant en outre, l'étape de faire disparaître totalement l'hydrogène encore présent à l'anode de la pile, effectuée après extinction complète de la pile à combustible cette étape comprenant une étape de pompage électrochimique, mettant en oeuvre une membrane électrochimique installée en dehors de l'empilement.

2. Procédé selon la revendication 1, dans lequel l'étape de faire disparaître l'hydrogène comprend également à une étape d'aspiration mécanique.

3. Procédé selon la revendication 1 ou 2, dans lequel l'étape de faire disparaître l'hydrogène comprend également une étape de soufflage, consistant à injecter à la cathode de l'azote en surpression, destiné à remplacer l'hydrogène.

4. Procédé selon l'une des revendications précédentes, dans lequel l'étape de faire disparaître l'hydrogène est effectuée également en consommant l'hydrogène au moyen d'une résistance installée aux bornes de la pile à combustible.

5. Procédé de démarrage d'une pile à combustible à membrane électrolyte polymère ayant subi une procédure d'arrêt conforme à l'une des revendications 1 à 5, le procédé de démarrage comportant une étape initiale d'aspiration de gaz comburant présent à l'anode avant d'injecter le gaz carburant.

6. Système à pile à combustible comprenant un empilement de cellules électrochimiques formant pile à combustible à membrane polymère échangeuse d'ions et un circuit gaz, ledit circuit comprenant :
- un circuit d'alimentation (11) en gaz carburant reliant un réservoir de gaz carburant à l'anode de la pile à combustible,
- un circuit d'alimentation (12b) en gaz comburant reliant un réservoir de gaz comburant, ou l'air atmosphérique, à la cathode de la pile à combustible,
**caractérisé en ce que** le système comprend en outre des moyens aptes à provoquer une disparition totale de l'hydrogène présent à l'anode de la pile à combustible, ces moyens comprenant une membrane polymère installée en dehors de l'empilement.

7. Système selon la revendication 6, dans lequel les moyens aptes à provoquer une disparition de l'hydrogène comprennent également une pompe à vide installée dans le circuit d'alimentation en gaz carburant.

8. Système selon la revendication 6 ou 7, dans lequel les moyens aptes à provoquer une disparition de l'hydrogène comprennent également une résistance installée en parallèle de la pile à combustible.

## Patentansprüche

1. Verfahren zum Stoppen einer Polymerelektrolytmembran-Brennstoffzelle, wobei die Brennstoffzelle einen Zellenstapel umfasst und in ein System eingebaut ist, das einen Kreislauf zur Versorgung mit Brenngas, der einen Brenngasbehälter mit der Anode der Brennstoffzelle verbindet, und einen Kreislauf zur Versorgung mit Sauerstoffträgergas, der einen Sauerstoffträgergas-Behälter oder die atmosphärische Luft verbindet, umfasst, wobei das Verfahren eine Prozedur zum Beenden der Verbrennung in der Brennstoffzelle umfasst, welche die folgenden Schritte umfasst:
• (i) Unterbrechung der Versorgung mit Brenngas und mit Sauerstoffträgergas;
• (ii) Aufrechterhaltung einer Entnahme von Strom, solange das Sauerstoffträgergas nicht ausreichend aufgebraucht worden ist;
• (iii) Einspritzung von mit Stickstoff angereichertem Gas in das System zur Versorgung mit Sauerstoffträgergas,
und das Verfahren außerdem den Schritt umfasst, den an der Anode der Zelle noch vorhandenen Wasserstoff vollständig verschwinden zu lassen, welcher nach dem vollständigen Verbrennungsende in der Brennstoffzelle durchgeführt wird, wobei dieser Schritt einen Schritt des elektrochemischen Pumpens umfasst, bei dem eine elektrochemische Membran zum Einsatz kommt, die außerhalb des Stapels installiert ist.

2. Verfahren nach Anspruch 1, wobei der Schritt des Verschwindenlassens des Wasserstoffs außerdem einen Schritt der mechanischen Absaugung umfasst.

3. Verfahren nach Anspruch 1 oder 2, wobei der Schritt des Verschwindenlassens des Wasserstoffs außerdem einen Schritt des Blasens umfasst, der darin besteht, an der Kathode Stickstoff mit Überdruck einzuspritzen, der dazu bestimmt ist, den Wasserstoff zu verdrängen.

4. Verfahren nach einem der vorhergehenden Ansprüche, wobei der Schritt des Verschwindenlassens des Wasserstoffs außerdem durchgeführt wird, indem der Wasserstoff mittels eines Widerstandes verbraucht wird, der an den Anschlüssen der Brennstoffzelle installiert ist.

5. Verfahren zum Starten einer Polymerelektrolytmembran-Brennstoffzelle, die einer Prozedur zum Stoppen gemäß einem der Ansprüche 1 bis 5 unterzogen wurde, wobei das Verfahren einen Anfangsschritt der Absaugung von Sauerstoffträgergas, das an der Anode vorhanden ist, vor dem Einspritzen des Brenngases beinhaltet.

6. Brennstoffzellensystem, welches einen Stapel von elektrochemischen Zellen, die eine Brennstoffzelle mit Ionenaustauscher-Polymermembran bilden, und einen Gaskreislauf umfasst, wobei der Kreislauf umfasst:
- einen Kreislauf zur Versorgung (11) mit Brenngas, der einen Brenngasbehälter mit der Anode der Brennstoffzelle verbindet,
- einen Kreislauf zur Versorgung (12b) mit Sauerstoffträgergas, der einen Sauerstoffträgergas-Behälter oder die atmosphärische Luft mit der Kathode der Brennstoffzelle verbindet,
**dadurch gekennzeichnet, dass** das System außerdem Mittel umfasst, die geeignet sind, ein vollständiges Verschwinden des an der Anode der Brennstoffzelle vorhandenen Wasserstoffs hervorzurufen, wobei diese Mittel eine Polymermembran umfassen, die außerhalb des Stapels installiert ist.

7. System nach Anspruch 6, wobei die Mittel, die geeignet sind, ein Verschwinden des Wasserstoffs hervorzurufen, außerdem eine Vakuumpumpe umfassen, die im Kreislauf zur Versorgung mit Brenngas installiert ist.

8. System nach Anspruch 6 oder 7, wobei die Mittel, die geeignet sind, ein Verschwinden des Wasserstoffs hervorzurufen, außerdem einen Widerstand umfassen, der zu der Brennstoffzelle parallelgeschaltet ist.

## Claims

1. Method for stopping a polymer electrolyte membrane fuel-cell stack, the fuel-cell stack comprising a stack of cells and being installed in a system comprising a fuel-gas supply circuit connecting a fuel-gas tank to the anode of the fuel-cell stack, and an oxidant-gas supply circuit connected to an oxidant-gas tank, or to atmospheric air, the method comprising a procedure for shutting down the fuel-cell stack comprising the following steps:
• (i) cutting off the supply of fuel gas and oxidant gas;
• (ii) continuing to draw current until the oxidant gas is sufficiently consumed; and
• (iii) injecting gas enriched with nitrogen into the oxidant-gas supply system,
the method being **characterized in that** it furthermore comprises the step of completely eliminating the hydrogen still present at the anode of the stack, this step being performed after a complete shut-off of the fuel cell stack, and this step comprising an electrochemical pumping step, implementing an electrochemical membrane installed outside of the stack.

2. Method according to Claim 1, in which the step of completely eliminating the hydrogen also comprises a mechanical suction step.

3. Method according to Claim 1 or 2, in which the step of eliminating the hydrogen also comprises a blowing step, consisting in injecting, at the cathode, a positive pressure of nitrogen, intended to replace the hydrogen.

4. Method according to one of the preceding claims, in which the step of eliminating the hydrogen is also carried out by consuming the hydrogen by means of a resistance installed across the terminals of the fuel-cell stack.

5. Method for starting up a polymer electrolyte membrane fuel-cell stack having undergone a stopping procedure according to one of Claims 1 to 5, the starting-up method including an initial step of suction of oxidant gas present at the anode before injecting the fuel gas.

6. System containing a fuel-cell stack, said system comprising a gas circuit and a stack of electrochemical cells forming a fuel-cell stack comprising a polymer ion exchange membrane, said circuit comprising:
- a fuel-gas supply circuit (11) connecting a fuel-gas tank to the anode of the fuel-cell stack; and
- an oxidant-gas supply circuit (12b) connecting an oxidant-gas tank, or atmospheric air, to the cathode of the fuel-cell stack;
**characterized in that** the system furthermore comprises means able to completely eliminate the hydrogen present at the anode of the fuel-cell stack and in which these means comprise a polymer membrane installed outside of the stack.

7. System according to Claim 6, in which the means able to completely eliminate the hydrogen comprise a vacuum pump installed in the fuel-gas supply circuit.

8. System according to Claim 6 or 7, in which the means able to completely eliminate the hydrogen comprise a resistance installed in parallel with the fuel-cell stack.
